# EUROPEAN PATENT SPECIFICATION

(11) **EP 2 381 524 B1**
(45) Date of publication and mention of the grant of the patent: **10.07.2013**
(21) Application number: 09848915.6
(22) Date of filing: 01.09.2009
(51) Int. Cl.: H01M 2/04, H01M 2/30, H01M 10/08, H01M 10/12

(54) **LEAD ACID BATTERY**
BLEIBATTERIE
BATTERIE PLOMB-ACIDE

(43) Date of publication of application: 26.10.2011
(60) Divisional application: 12004965.5
(73) Proprietor: Panasonic Corporation, Kadoma-shi Osaka 571-8501 (JP)
(72) Inventor: HARADA, Misaki c/o Panasonic Corporation, Osaka-shi, Osaka 540-6207 (JP); SUGIE, Kazuhiro c/o Panasonic Corporation, Osaka-shi, Osaka 540-6207 (JP); SHIMODA, Kazuhiko c/o Panasonic Corporation, Osaka-shi, Osaka 540-6207 (JP)
(74) Representative: Grünecker, Kinkeldey, Stockmair & Schwanhäusser
(86) International application number: PCT/JP2009/004302
(87) International publication number: WO 2011/027383

(56) References cited:
- EP-A1- 1 742 289
- JP-A- 2004 207 004
- JP-A- 2006 114 315
- JP-A- 2006 310 062
- JP-A- 2009 266 788

## Description

### TECHNICAL FIELD

The present disclosure relates to lead-acid batteries for use in idle reduction operation.

### BACKGROUND ART

In recent years, environmental concerns have led to a widespread use of automobiles capable of performing so-called idle reduction operation, i.e., shutting off the engine when being stationary at traffic lights or the like, and restarting the engine when starting the vehicle. Lead-acid batteries for cell starters to be installed in such automobiles need to be adapted to idle reduction operation.

Alloys such as a calcium-based lead alloy or an antimony-based lead alloy are conventionally used for grids of lead-acid batteries. When antimony is present at the surface of a positive grid, an active material is firmly adhered to the grid, thereby preventing the capacity from decreasing when deep charge and discharge are repeated. For this reason, in the case of using a calcium-based lead alloy, a lead alloy containing antimony is attached to the alloy surface, or an antimony compound is dissolved in an electrolyte, in the formation of a lead-acid battery.

If the lead-acid battery is always in a charged state, the amount of antimony in the surface of the positive electrode does not significantly affect the battery life and battery characteristics in application. However, with recent attention to techniques for reducing the amount of carbon dioxide emission, attention has been given to idle reduction operation, i.e., the operation of halting an engine while an automobile is stationary, and restarting the engine when the automobile is taken off. During the idle reduction, the engine does not operate so that a power supply from an alternator is stopped, and power to be consumed in operation of a light, a radio, and a wiper is supplied from a lead-acid battery installed in the automobile.

Under this circumstance, a study was carried out how a commonly-used automotive lead-acid battery in which six cells were linearly arranged degraded after a simulated life test in idle reduction operation. Then, it was found that each of intermediate second to fifth cells was in a lower state of charge (hereinafter referred to as SOC) than first and sixth cells (hereinafter referred to as end cells) located at both ends of the six cells. Thus, it was concluded that the battery life depends on the intermediate cells. This is considered to be because of the following reason. When a commonly-used lead-acid battery including linearly arranged six cells is repeatedly charged and discharged, the temperature of the four intermediate cells in contact with the air in small areas increases to be higher than that of the end cells, thereby causing self-discharge to progress. Consequently, the SOC of the intermediate cells becomes lower than that of the end cells.

When idle reduction operation is performed with a lead-acid battery using a grid of a calcium-based lead alloy or a low antimony-based lead alloy, the battery tends to be insufficiently charged to reach the end of its life with the progress of charge and discharge. To prevent this, Patent Document 1 shows a technique of adding antimony to an electrolyte.

### CITATION LIST

### PATENT DOCUMENT

PATENT DOCUMENT 1: Japanese Patent Publication No. P2004-207004

### SUMMARY OF THE INVENTION

### TECHNICAL PROBLEM

However, a lead-acid battery actually fabricated with reference to Patent Document 1 did not exhibit excellent life characteristics, and negative-electrode ears were corroded. To find out causes for this, an investigation was carried out to find out that characteristic differences occurred because of the differences in temperature and self-discharge depending on the antimony amount between the cells, and as a result, the degraded cells dominated the life characteristics of the entire battery.

Specifically, when there is a characteristic difference due to the temperature difference between the cells, the degraded cells dominate the life characteristics of the entire battery.

On the other hand, when charge and discharge of the lead-acid battery is frequently repeated in a partially discharged state, lead sulfate accumulates on a lower portion of a negative plate in a cell in a low SOC, resulting in gradually reducing the reactive surface area of the active material. Accordingly, when the cell in the low SOC is charged, the current density in an upper portion of the plate increases, and reduction reaction of a lead sulfate coat on the negative-electrode grid ear occurs. Consequently, the surface of the ear might be corroded to become thin, resulting in occurrence of disconnection.

In this manner, by simply adding an antimony compound to the electrolyte as described above, stacking of the electrolyte is suppressed, but characteristic differences are caused because of the temperature difference between the cells. In particular, a lead-acid battery for use in idle reduction operation which is not likely to be fully charged needs to equalize the amount of self-discharge caused by the cell temperature difference in long-term use, and also, to keep the equalized amount of self-discharge. Further, when the antimony concentration is high, the corrosion of a negative electrode strap can progress. For these reasons, the amount of addition of antimony cannot be simply increased.

More specifically, a lead-acid battery for use in idle reduction operation which is not likely to be fully charged has a short life because the amount of self-discharge due to a cell temperature difference in long-term use and a decrease in a hydrogen overvoltage caused by antimony differs between the cells. In addition, when charge and discharge of a lead-acid battery exhibiting different SOCs between the cells is frequently repeated in a partially discharged state, lead sulfate accumulates on a lower portion of a negative plate in a cell in a low SOC, thereby gradually reducing the reactive surface area of the active material. Accordingly, when the cell in the low SOC is charged, the current density in an upper portion of the plate increases, and reduction reaction of a lead sulfate coat on a negative-electrode grid ear occurs. Consequently, the surface of the ear might be corroded to become thin, resulting in occurrence of disconnection. For these reasons, it is necessary to equalize the amount of self-discharge as well as to maintain the equalized amount of self-discharge.

Further, in idle reduction operation or a restart, an automobile strongly vibrates, and thus connection portions between terminals of a lead-acid battery and wires are likely to become loose. This looseness directly causes an increase in resistance (i.e., a degradation of function as a cell starter). Thus, the user of the automobile needs to frequently fasten these connection portions. However, this fastening causes the terminals to be slender to be deformed, thereby decreasing hermeticity of the lead-acid battery, and thus, causing leakage of the electrolyte. This leakage causes further deterioration of function of the lead-acid battery. In view of this, in introducing idle reduction operation, the foregoing problems need to be solved.

### SOLUTION TO THE PROBLEM

To solve the problems, a lead-acid battery according to the present invention has a structure in which a plurality of cells are linearly arranged, plate packs provided in the cells are connected in series, and a concentration of antimony contained in an electrolyte in each of the cells located at both ends of the plurality of cells is higher than that in each of the cells located between the cells at both ends.

The concentration of antimony contained in the electrolyte may be in the range from 4 ppm to 500 ppm, both inclusive.

A ratio in the concentration of antimony contained in the electrolyte between one of the cells having a high antimony concentration and another of the cells having a low antimony concentration may be in the range from 1.2 to 6.8, both inclusive.

A ratio in the concentration of antimony contained in the electrolyte between the cells may be in the range from 2 to 3, both inclusive.

### ADVANTAGES OF THE INVENTION

With the foregoing configurations of the present invention, the antimony concentration among the cells are adjusted such that variations in SOC between the cells can be suppressed in application such as idle reduction operation in which charge and discharge of the battery is frequently repeated in a partially discharged region.

### BRIEF DESCRIPTION OF THE DRAWINGS

[FIG. 1] FIG. 1 is a schematic view of a top surface of a container.
[FIG. 2] FIG. 2 is a perspective view illustrating a positive end cell.
[FIG. 3] FIG. 3 is a view illustrating a lead-acid battery of an embodiment.
[FIG. 4] FIG. 4 is a view illustrating the lead-acid battery of the embodiment.
[FIG. 5] FIG. 5 is a view illustrating another lead-acid battery of the embodiment.
[FIG. 6] FIG. 6 is a view illustrating still another lead-acid battery of the embodiment.
[FIG. 7] FIG. 7 is a graph showing an evaluation result on the number of lifetime cycles and the corrosion percentage of negative-electrode current collector ears.

### DESCRIPTION OF EMBODIMENTS

An embodiment of the present invention will be described hereinafter with reference to the drawings.

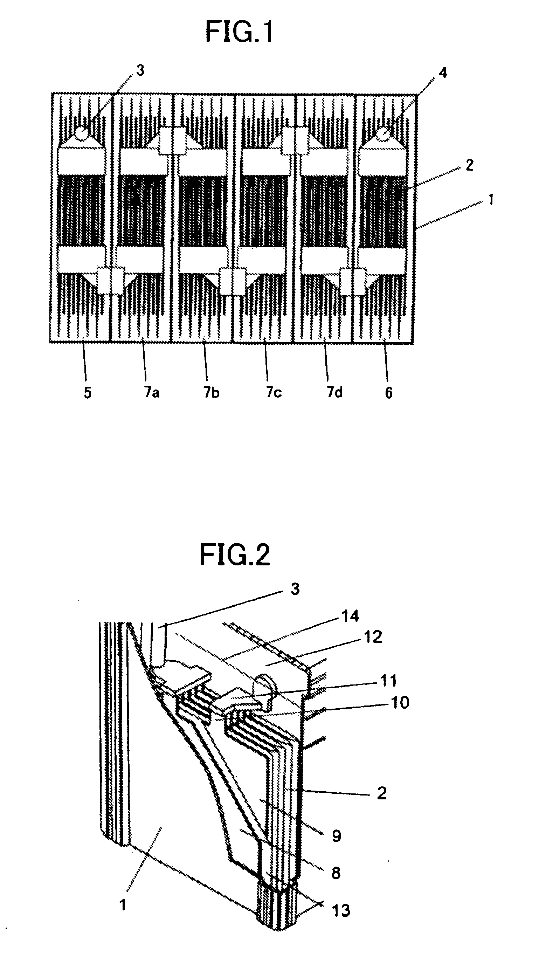

FIG. 1 is a schematic view of a container 1 according to this embodiment when viewed from above the container 1. In the container 1, a plurality of cells are linearly arranged (i.e., are arranged in a line), and a plate pack 2 is inserted in each of the cells. The cells are electrically connected to each other. This container 1 includes a positive end cell 5, a negative end cell 6, and intermediate cells 7. The positive end cell 5 and the negative end cell 6 respectively have a positive terminal 3 and a negative terminal 4 electrically connected to portions outside the battery. The intermediate cells 7 are the second to fifth cells (i.e., a second cell 7a, a third cell 7b, a fourth cell 7c, and a fifth cell 7d).

FIG. 2 is a perspective view illustrating the positive end cell 5. In FIG. 2, the plate pack 2 including the positive terminal 3 is inserted in the positive end cell 5 in the container 1, positive plates 8 are connected in parallel with each other to the positive terminal 3 connected to the outside, and ears 10 on top of negative plates 9 are joined to a strap 11 in the same manner to be connected to an adjacent cell through a partition 12. The plate pack 2 includes the positive plates 8, the negative plates 9, the strap 11, the positive terminal 3, and a separator 13. To control the antimony concentration in the plate pack 2, each of the positive plate 8 and the negative plate 9 is made of a calcium-based lead alloy, the positive terminal 3 is made of a lead-tin alloy, and the separator 13 is made of polyethylene.

The lead-acid battery of this embodiment has two features. First, an electrolyte 14 is poured into the cells to be at a level higher than the strap 11. Second, the antimony concentration in the electrolyte in the end cells (i.e., the positive end cell 5 and the negative end cell 6) is higher than that in the intermediate cells 7. The concentration of antimony contained in the electrolyte is in the range from 4 ppm to 500 ppm, both inclusive. The antimony concentration ratio between the cell having a high antimony concentration and the cell having a low antimony concentration is in the range from 1.2 to 6.8, both inclusive.

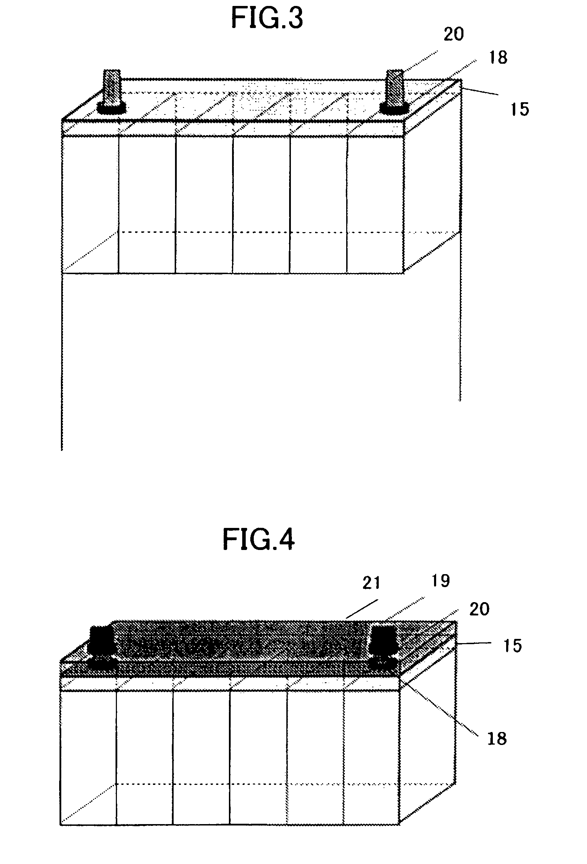

Then, as shown in FIG. 3, a cover 15 in which inner terminals 18 made of a lead-tin-based alloy is insert-molded is welded to the container 1. Thereafter, as shown in FIG. 4, a top lid 21 is welded to the cover 15 so that outer terminals 19 and poles 20 are welded to each other, thereby allowing the inner terminals 18 welded to the poles 20 to be connected to the outer terminals 19 through the poles 20. In this configuration, even when the outer terminals 19 become thin to be deformed by fastening (e.g., screwing) of connection portions between the terminals (e.g., the outer terminals 19) and wires (not shown) which is repeatedly performed in idle reduction operation, the inner terminals 18 serve as a cover to prevent leakage of the electrolyte, thereby preventing further functional deterioration of the lead-acid battery. In addition, in the above configuration, only the inner terminals 18 made of an antimony-free lead alloy are in contact with the electrolyte (i.e., the outer terminals 19 made of a lead alloy having high strength but containing antimony are not in contact with the electrolyte), thereby making it possible to maintain the balance in the antimony concentration in the electrolyte for a long period of time.

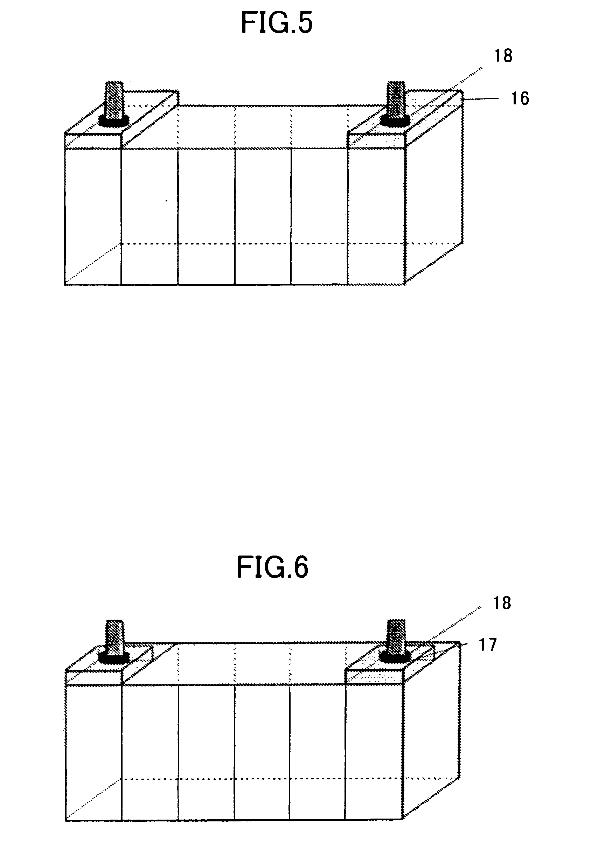

As illustrated in FIG. 3, all the cells do not need to be covered with the cover 15. Alternatively, a cover 16 may be attached only to the positive end cell 5 and the negative end cell 6 as illustrated in FIG. 5, or a cover 17 may be attached only to the bottom of the outer terminals 19 as illustrated in FIG. 6. In these cases, similar advantages can also be obtained.

### <Examples>

Advantages of this embodiment will now be described with reference to examples.

The positive plates 8 commonly used in lead-acid batteries were formed by filling a grid (not shown) obtained by expanding a rolled sheet of a calcium-based lead alloy, with a paste obtained by kneading lead oxide powder with sulfuric acid and purified water.

The negative plates 9 commonly used for the batteries were obtained by filling a grid obtained by expanding a rolled sheet in the same manner as in the positive plates, with a paste obtained by kneading lead oxide powder to which an organic additive, for example, was added in an ordinary manner, with sulfuric acid and purified water.

The resultant plates were subjected to aging and drying. Then, the positive plates 8 were wrapped with bag-shaped separators 13 of polyethylene. Thereafter, the positive plates 8 and the negative plates 9 were alternately stacked, and the ears 10 of the negative plates 9 were welded to the strap 11, thereby connecting the ears 10 in parallel with each other. In this manner, a plate pack 2 was formed. Then, the plate pack was inserted in each of the six cells which were linearly arranged in the container 1. The plate packs were connected in series with partitions 12 interposed therebetween.

Then, the cover 15 was welded to the container 1 housing the plate packs. The inner terminals 18 and the poles 20 were welded together with a laser. Subsequently, the top lid 21 was welded to the cover 15. Lastly, the outer terminals 19 and the poles 20 were welded together with a burner. In this manner, a lead-acid battery was fabricated.

Subsequently, dilute sulfuric acid having a density of 1.210 g/cm³ was poured into this lead-acid battery, to perform formation in a container. Then, a sulfuric acid antimony solution was added so as to obtain an appropriate antimony concentration for evaluation so that the density of the resultant solution was adjusted to 1.280 g/cm³ (corresponding to a value obtained at 20°C).

At this time, a comparative battery, i.e., a conventional battery, in which the antimony amounts in the electrolyte in the positive end cell 5, the negative end cell 6, and the intermediate cells 7 were uniform, was fabricated. In addition, sample batteries having various concentration ratios in which the antimony concentrations in the end cells were higher than those in the intermediate cells, were also fabricated. In these sample batteries, the antimony concentrations in the electrolyte in the intermediate cells were 4 ppm, 25 ppm, and 70 ppm, and the ratio of the antimony concentrations in the electrolyte in the end cells with respect to those in the intermediate cells was in the range from 1.0 to 7.0, both inclusive.

Table 1 shows a combination of the sample batteries.

In the battery No. 1, the antimony concentrations in the positive end cell 5, the negative end cell 6, and the intermediate cells 7 were 4 ppm, 25 ppm, and 70 ppm, as in the conventional battery. On the other hand, in the battery No. 2, the antimony concentrations in the intermediate cells 7 were 4ppm, 25ppm, and 70ppm as in the conventional battery, but the antimony concentrations in the positive end cell 5 and the negative end cell 6 were 4.8 ppm, 30.0 ppm, 84.0 ppm, i.e., the ratio in antimony concentration between the positive and negative end cells 5 and 6 and the intermediate cells 7 was 1.2.

Similarly, in the batteries No. 3 to No. 10, the antimony concentrations in the positive end cell 5 and the negative end cell 6 were higher than the antimony concentrations, i.e., 4 ppm, 25 ppm, and 70 ppm, in the intermediate cells 7 so that the concentration ratio was in the range from 1.5 to 6.8.

In the battery No. 11, the antimony concentrations in the intermediate cells 7 were 4 ppm, 25 ppm, and 70 ppm, as in the foregoing batteries, and the antimony concentrations in the positive end cell 5 and the negative end cell 6 were 28.0 ppm, 175.0 ppm, 490.0 ppm so that the concentration ratio between the positive and negative end cells 5 and 6 and the intermediate cells 7 was 7.

**[Table 1]**

| Lead-acid battery No. | Concentration ratio | Antimony concentration① (End cell) ppm | Antimony concentration② (End cell) ppm | Antimony concentration③ (End cell) ppm | Notes |
|---|---|---|---|---|---|
| No.1 | 1.0 | 4.0 | 25.0 | 70.0 | comparative example |
| No.2 | 1.2 | 4.8 | 30.0 | 84.0 | The invention |
| No.3 | 1.5 | 6.0 | 37.5 | 105.0 | ↑ |
| No. 4 | 2.0 | 8.0 | 50.0 | 140.0 | ↑ |
| No.5 | 3.0 | 12.0 | 75.0 | 210.0 | ↑ |
| No.6 | 4.0 | 16.0 | 100.0 | 280.0 | ↑ |
| No.7 | 5.0 | 20.0 | 125.0 | 350.0 | ↑ |
| No.8 | 6.0 | 24.0 | 150.0 | 420.0 | ↑ |
| No.9 | 6.5 | 26.0 | 162.5 | 455.0 | ↑ |
| No.10 | 6.8 | 27.2 | 170.0 | 416.0 | ↑ |
| No.11 | 7.0 | 28.0 | 175. 0 | 490.0 | comparative example |

Lifetime evaluation was performed by repeatedly charging and discharging the sample batteries as a simulation of idle reduction operation. The lifetime evaluation was performed with a method conforming to the Standard of Batterie Association (SBA S 0101) under the following conditions Temperature: Air bottle at 25°C ± 2°C (where a wind velocity near the lead-acid battery was 2.0 m/sec. or less)

Discharge:
Discharge 1) 59.0 sec. ± 0.2 sec. with a discharge current of 45 A ± 1 A
Discharge 2) 1.0 sec. ± 0.2 sec. with a discharge current of 300 A ± 1 A

Charge: 60.0 sec. ± 0.3 sec. at a charge voltage of 14.0 V ± 0.03 V with a limiting current of 100 A

Leaving Conditions: The battery was left for 40 to 48 hours every 3600 cycles, and then the cycle was started.

Test Termination Condition: At the time when it was confirmed that the discharge voltage was less than 7.20 V

Water Refilling Condition: Water refilling was not performed until 30000 cycles were performed.

The number of cycles at which the evaluation was terminated (hereinafter referred to as the number of lifetime cycles) was defined as life characteristics.

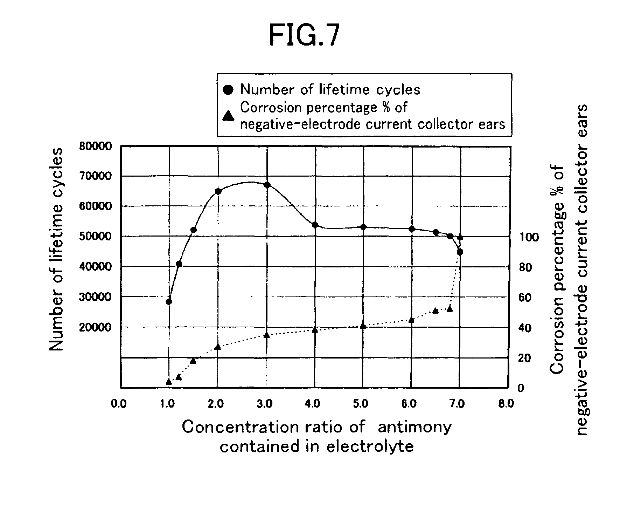

After the battery had reached the end of its life, a disassembling investigation was performed so that the thickness (L0) of the negative-electrode ear previously measured before the investigation and the thickness (L1) of the negative-electrode ear after the end of the battery life, were measured. Then the difference before and after the lifetime evaluation (i.e., L0-L1) and a corrosion percentage were calculated. FIG. 7 shows the number of cycles before the end of the battery life and a corrosion percentage of the negative-electrode current collector ears, with respect to the concentration ratio of antimony contained in the electrolyte in the positive end cell 5 and the negative end cell 6. FIG. 7 shows the average values obtained by a test using six batteries.

The battery No. I was fabricated such that the six cells have a uniform concentration of antimony in the electrolyte. The evaluation of the life characteristics of the battery No. 1 shows that the battery No. 1 reached the end of its life after 28000 cycles. In the lead-acid battery which has reached its end, the concentration of lead sulfate in the negative-electrode active material particularly in the four intermediate cells was 13%, i.e., higher than those in the positive end cell 5 and the negative end cell 6. This shows that the amount of discharge of the intermediate cells 7 was larger than those of the positive end cell 5 and the negative end cell 6, and thus the battery reached the end of its life because the battery had been used in an insufficiently charged state. This is considered to be because of the following reasons. The area of the positive and negative end cells 5 and 6 in contact with the air was large, whereas the area of the intermediate cells 7 in contact with the air was smaller than that of the positive and negative end cells 5 and 6. Thus, the heat dissipation of the intermediate cells 7 during the evaluation degraded as compared to that of the positive and negative end cells 5 and 6, thereby causing a temperature rise. As a result, self-discharge progressed.

In the batteries No. 2 to No. 10, the antimony concentrations in the electrolyte in the positive end cell 5 and the negative end cell 6 were 1.2 to 6.8 times as high as those in the four intermediate cells. The number of lifetime cycles of the battery No. 2 having a concentration ratio of 1.2 was improved to be 41000. The numbers of lifetime cycles of the battery No. 4 having a concentration ratio of 2.0 and the battery No. 5 having a concentration ratio of 3.0 were respectively 65000 and 67000 at the maximum. In these batteries, lead sulfate in the negative plate after the batteries had reached the end of their lives, the difference between the cell containing the largest amount of lead sulfate and the cell containing the smallest amount of lead sulfate was 3.4%. As compared to the battery No. 1 where the difference was 13%, SOC variations were suppressed. The number of lifetime cycles tends to gradually decrease as the concentration ratio increases. However, when the antimony concentrations in the positive end cell 5 and the negative end cell 6 were higher than those of the intermediate cells 7, the life characteristics were better than those of the conventional battery No. 1.

Further, as in the battery No. 11 having increased antimony concentrations, when the antimony concentrations of the positive end cell 5 and the negative end cell 6 were set 7.0 times as high as those of the intermediate cells 7, the negative-electrode grid ears corroded to be broken slightly before 60000 cycles. The amounts of lead sulfate in the negative plates in the positive end cell 5 and the negative end cell 6 were larger than those of the four intermediate cells by about 10% to about 15%. For this reason, when the antimony concentrations in the positive end cell 5 and the negative end cell 6 were set 7.0 times or more as high as those of the antimony concentrations in the intermediate cells 7, self-discharge of the positive end cell 5 and the negative end cell 6 progressed more rapidly than that of the intermediate cells 7, thereby causing the SOC to degrade and accelerating corrosion of the ears. In consideration of this result, even when the antimony concentration ratio is set at 7.0 or higher, negative-electrode grid ears are considered to corrode, as in the battery No. 11.

Preferably, based on the foregoing examples of this embodiment, in a lead-acid battery in which a plurality of cells are linearly arranged, the antimony concentrations in the electrolyte in the end cells are higher than those in the intermediate cells, and are in the range from 4 ppm to 500 ppm, and the antimony concentration ratio between the intermediate cells and the end cells is in the range from 1.2 to 6.8, both inclusive. In this configuration, the lead-acid battery can both enhance its life characteristics and reduce the corrosion percentage of the negative-electrode grid ears.

Specifically, in consideration of compositions of the inner terminals and the outer terminals, a cover in which the inner terminals of an antimony-free lead alloy are insert-molded is provided. This configuration can prevent antimony in the outer terminals of an antimony-based lead alloy from dissolving into the electrolyte, while preventing leakage of the electrolyte as described above. Accordingly, it is possible to keep the balance in self-discharge which has become uniform by adjusting the antimony concentrations.

Accordingly, by equalizing characteristics of all the cells in an application in which charge and discharge are frequently repeated in a partially discharged region in which a battery is not fully charged, a lead-acid battery exhibiting enhanced life characteristics and suppressed corrosion of negative-electrode grid ears can be obtained. Further, by reducing the antimony amount, corrosion of a negative-electrode strap can be suppressed.

In these examples, sulfuric acid antimony is employed. Alternatively, the same advantages can be achieved by employing a method of using a positive grid in which an antimony alloy is attached to the surface of a positive grid or a method of dissolving another antimony compound such as diantimony trioxide in the electrolyte.

### INDUSTRIAL APPLICABILITY

In a lead-acid battery according to the present invention, in an environment in which charge and discharge of the battery is frequently repeated in a partially discharged region such as in idle reduction operation, the SOC ratio between the cells can be maintained. Accordingly, it is possible to obtain excellent life characteristics, while preventing disconnection due to corrosion of a negative-electrode grid. Thus, the lead-acid battery of the present invention is very useful for industrial use.

**DESCRIPTION OF REFERENCE CHARACTERS**

| | |
|---|---|
| 1 | container |
| 2 | plate pack |
| 3 | positive terminal |
| 4 | negative terminal |
| 5 | positive end cell |
| 6 | negative end cell |
| 7 | intermediate cell |
| 7a | second cell |
| 7b | third cell |
| 7c | fourth cell |
| 7d | fifth cell |
| 8 | positive plate |
| 9 | negative plate |
| 10 | ear |
| 11 | strap |
| 12 | partition |
| 13 | separator |
| 14 | electrolyte |
| 15 | cover |
| 16 | cover |
| 17 | cover |
| 18 | inner terminal |
| 19 | outer terminal |
| 20 | pole |
| 21 | tp lid |

## Claims

1. A lead-acid battery having a structure in which a plurality of cells are linearly arranged and plate packs (2) provided in the cells are connected in series,
**characterised in that** the concentration of antimony contained in an electrolyte (14) in each of the cells (5) and (6) located at both ends of the plurality of cells is higher than that in each of the cells (7) located between the cells (5) and (6) at both ends.

2. The lead-acid battery of claim 1, wherein the concentration of antimony contained in the electrolyte (14) is in the range from 4 ppm to 500 ppm, both inclusive.

3. The lead-acid battery of claim 1 or 2, wherein a ratio in the concentration of antimony contained in the electrolyte (14) between one of the cells (5) and (6) having a high antimony concentration and another of the cells (7) having a low antimony concentration is in the range from 1.2 to 6.8, both inclusive.

4. The lead-acid battery of one of claims 1 to 3, wherein a ratio in the concentration of antimony contained in the electrolyte (14) between one of the cells (5) and (6) having a high antimony concentration and another of the cells (7) having a low antimony concentration is in the range from 2 to 3, both inclusive.

## Patentansprüche

1. Bleibatterie mit einem Aufbau, bei dem eine Mehrzahl von Zellen linear angeordnet ist und in den Zellen vorgesehene Plattenpakete (2) in Reihe verbunden sind,
**dadurch gekennzeichnet, dass** die Konzentration von in einem Elektrolyt (14) enthaltenem Antimon in jeder der Zellen (5) und (6), die an beiden Enden der Mehrzahl von Zellen befindlich sind, höher ist als diejenige in jeder der Zellen (7), die zwischen den Zellen (5) und (6) an beiden Enden befindlich sind.

2. Bleibatterie nach Anspruch 1, wobei die Konzentration von in dem Elektrolyt (14) enthaltenem Antimon in dem Bereich von einschließlich 4 ppm bis einschließlich 500 ppm ist.

3. Bleibatterie nach Anspruch 1 oder 2, wobei ein Verhältnis der Konzentration von in dem Elektrolyt (14) enthaltenem Antimon zwischen einer der Zellen (5) und (6) mit einer hohen Antimonkonzentration und einer weiteren der Zellen (7) mit einer niedrigen Antimonkonzentration in dem Bereich von einschließlich 1,2 bis einschließlich 6,8 ist.

4. Bleibatterie nach einem der Ansprüche 1 bis 3, wobei ein Verhältnis der Konzentration von in dem Elektrolyt (14) enthaltenem Antimon zwischen einer der Zellen (5) und (6) mit einer hohen Antimonkonzentration und einer weiteren der Zellen (7) mit einer niedrigen Antimonkonzentration in dem Bereich von einschließlich 2 bis einschließlich 3 ist.

## Revendications

1. Batterie plomb-acide ayant une structure dans laquelle une pluralité de cellules sont agencées de manière linéaire et des blocs de plaques (2) disposés dans les cellules sont connectés en série,
**caractérisée en ce que** la concentration d'antimoine contenu dans un électrolyte (14) dans chacune des cellules (5) et (6) situées aux deux extrémités de la pluralité de cellules est supérieure à celle de chacune des cellules (7) situées entre les cellules (5) et (6) aux deux extrémités.

2. Batterie plomb-acide selon la revendication 1, dans laquelle la concentration d'antimoine contenu dans l'électrolyte (14) se situe dans la plage allant de 4 ppm à 500 ppm, ces deux valeurs incluses.

3. Batterie plomb-acide selon la revendication 1 ou 2, dans laquelle le rapport de concentration d'antimoine contenu dans l'électrolyte (14) entre l'une des cellules (5) et (6) ayant une forte concentration d'antimoine et une autre des cellules (7) ayant une faible concentration d'antimoine se situe dans la plage allant de 1,2 à 6,8, ces deux valeurs incluses.

4. Batterie plomb-acide selon l'une des revendications 1 à 3, dans laquelle le rapport de concentration d'antimoine contenu dans l'électrolyte (14) entre l'une des cellules (5) et (6) ayant une forte concentration d'antimoine et une autre des cellules (7) ayant une faible concentration d'antimoine se situe dans la plage allant de 2 à 3, ces deux valeurs incluses.
